# EUROPÄISCHE PATENTSCHRIFT

(11) **EP 1 074 768 B1**
(45) Veröffentlichungstag und Bekanntmachung des Hinweises auf die Patenterteilung: **04.04.2007**
(21) Anmeldenummer: 00113311.5
(22) Anmeldetag: 23.06.2000
(51) Int. Cl.: F16H 61/22, B60W 10/10

(54) **Blockiereinrichtung für das Antriebssystem eines landwirtschaftlichen Fahrzeugs**
Lockable drive system for earthmoving vehicle
Verrouillage d'un système de traction pour véhicule de travail

(30) Priorität: 31.07.1999 DE 19936264
(43) Veröffentlichungstag der Anmeldung: 07.02.2001
(73) Patentinhaber: DEERE & COMPANY, Moline, Illinois 61265-8098 (US)
(72) Erfinder: Scheid, Heinrich, 66440 Blieskastel (DE); Rabe, Bernd, 66503 Dellfeld (DE)
(74) Vertreter: Holst, Sönke

(56) Entgegenhaltungen:
- EP-A- 0 819 562
- US-A- 3 169 616
- US-A- 4 300 652
- US-A- 4 346 618
- US-A- 4 349 089
- US-A- 5 383 541
- US-A- 5 473 895

## Beschreibung

Die Erfindung betrifft ein Antriebssystem eines landwirtschaftlichen Fahrzeugs, mit einem Hydromotor, der unter Zwischenschaltung eines Getriebes, das eine Neutralstellung aufweist, mit dem Erdboden im Eingriff befindliche Elemente zum Vortrieb des Fahrzeugs, insbesondere Räder und/oder Gleisketten, antreibt, und mit einer Schalteinrichtung zum Schalten des Getriebes, wobei der Hydromotor geeignet ist, auf die mit dem Erdboden im Eingriff befindlichen Elemente als Bremse zu wirken.

Bei landwirtschaftlichen Fahrzeugen und Erntevorsätzen, wie Schneidwerken und Maisgebissen, ist eine Tendenz zu immer leistungsfähigeren, größeren und deshalb auch schwereren Baueinheiten erkennbar. Es besteht aus Gründen der Betriebs- und Verkehrssicherheit die Notwendigkeit, auch die Bremsen der Fahrzeuge entsprechend zu dimensionieren. Um nicht die konventionellen Reibungsbremsen, die in der Regel Scheiben- oder Trommelbremsen sind und mechanisch auf die Radachsen einwirken, noch größer und somit kostspieliger gestalten zu müssen, besteht auch die Möglichkeit, die Bremswirkung eines hydrostatischen Antriebs des Fahrzeugs, dessen Taumelscheibe in Nullstellung verbracht wird, auszunutzen.

In einer Richtlinie für Bremsanlagen von Fahrzeugen mit hydrostatischem Antrieb (VkBl. Amtlicher Teil, Heft 21 - 1998 vom 5. Oktober 1998, Seite 1226 ff) ist festgelegt, daß derartige Fahrzeuge mit hydrostatischem Antrieb zum Straßenverkehr zugelassen sind, wenn dieser während der Fahrt nicht ausgekoppelt werden kann und als hydrostatische Bremsanlage wirkt oder Bestandteil zumindest einer Bremsanlage ist. Es ist nicht offenbart, wie das Auskoppeln verhindert werden kann.

In der gattungsgemäßen Schrift EP 0819562 A ist ein Getriebeschaltsystem für eine Erntemaschine beschrieben, bei dem der Benutzer einen dem gewünschten Gang zugeordneten Knopf drücken kann. Wird der Knopf gedrückt, wird durch eine Steuerung selbsttätig eine mechanische, vom Getriebe unabhängige Bremse betätigt, die die Erntemaschine zum Stillstand bringt. Steht die Erntemaschine still, was anhand des Ablaufs einer vorbestimmten Zeit, die im Regelfall für das Abbremsen der Erntemaschine benötigt wird, oder mittels eines Geschwindigkeitssensors festgestellt wird, erfolgt der Schaltvorgang. Der Grund dafür ist, daß das hydrostatische Getriebe der Erntemaschine nur im Stillstand schaltbar ist. Als nachteilig ist der hohe Aufwand anzusehen.

In der US 4572340 A ist eine Verriegelung für ein Automatikgetriebe beschrieben, die nur dann eine Verstellung zwischen einer Neutral-, Vorwärts- und Rückwärtsposition des Wahlhebels des Automatikgetriebes erlaubt, wenn die Betriebsbremsen des Fahrzeugs betätigt werden. Die Verriegelung arretiert den Wahlhebel solange, bis die Bremsen angelegt sind.

Das der Erfindung zugrunde liegende Problem wird darin gesehen, ein landwirtschaftliches Fahrzeug mit hydrostatischem Antrieb zu schaffen, das verkehrssicher und preisgünstig ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird verhindert, daß das Getriebe während des Fahrbetriebs des Fahrzeugs durch die Schalteinrichtung in die Neutralstellung (Leerlaufstellung) verbracht wird, in der keine Drehmomentkopplung des Getriebes zwischen Eingangs- und Ausgangswelle vorhanden ist. Während der Fahrt ist das Getriebe vielmehr durch die Blockiereinrichtung arretiert, und zwar (da anderenfalls gar kein Fahrbetrieb möglich wäre) in einer Antriebsstellung, in der das Getriebe ein Drehmoment vom Hydromotor auf die mit dem im Eingriff mit dem Erdboden befindlichen Elemente überträgt. Daher ist nicht zu befürchten, daß die Bremswirkung des Hydromotors durch einen versehentlichen oder absichtlichen Schaltvorgang entfallen kann. Erfindungsgemäß ist eine Blockiereinrichtung vorgesehen, die die Schalteinrichtung des Getriebes immer dann arretiert, in der sich das Fahrzeug bewegt. Steht das Fahrzeug hingegen still, kann die Blockeinrichtung die Schalteinrichtung freigeben, die Arretierung also lösen, so daß die Schalteinrichtung in beliebiger Weise betätigbar ist. Die Auswahl einer Gangstufe (d. h. einer bestimmten Übersetzung des Getriebes, die das Erreichen einer entsprechenden Endgeschwindigkeit ermöglicht) und/oder der Fahrtrichtung (Vorwärts- bzw. Rückwärtsgang) kann erfolgen. Ein Verbringen des Getriebes in die Neutralstellung ist in diesem Fall in der Regel nicht nachteilig, da Bremswirkung der zusätzlich vorgesehenen Reibungsbremsen ausreicht, das Fahrzeug im Stillstand zu halten.

Als Vorteile der Erfindung ist neben der einfachen und preiswerten Realisation anzusehen, daß die Blockiereinrichtung auch an bereits vorhandenen Fahrzeugen nachrüstbar ist; es ist lediglich die erfindungsgemäße Blockiereinrichtung hinzuzufügen.

In einer einfachen und preiswerten Ausführungsform steht die Schalteinrichtung mit dem Getriebe durch eine mechanische Einrichtung, wie ein Gestänge oder einen Bowden- oder Seilzug, in Verbindung, wobei die Einrichtung einen Endes an einem vom Bediener betätigbaren Schalthebel angebracht und anderen Endes mit einer Verstelleinheit des Getriebes gekoppelt ist. Alternativ wäre auch die Verwendung einer elektromechanischen oder hydraulischen Einrichtung denkbar, die ebenfalls eine Bewegung des Schalthebels auf die Verstelleinheit überträgt.

Die Blockiereinrichtung kann eingerichtet sein, den vom Bediener betätigbaren Schalthebel und/oder die Verstelleinheit bzw. Stellplatte des Getriebes und/oder die (mechanische) Einrichtung, über die der Schalthebel mit der Verstelleinheit bzw. Stellplatte des Getriebes in Betriebsverbindung steht, zu arretieren. Die beiden letztgenannten Lösungen sind besonders vorteilhaft, da in der Kabine, in der der Schalthebel angeordnet ist, oft relativ wenig Raum zur Verfügung steht, während in der Regel der Nähe des Getriebes hinreichend Raum vorhanden ist und die Blockiereinrichtung besonders unproblematisch an bereits vorhandenen Verstelleinrichtungen des Getriebes anbringbar ist. Denkbar wäre auch, den Schalthebel mechanisch mit einer weiteren, von der Verstelleinheit bzw. Stellplatte des Getriebes unabhängigen Einrichtung zu verbinden, die durch die Blockiereinrichtung arretierbar ist. Diese Einrichtung kann an beliebiger Stelle des Fahrzeugs angeordnet werden.

Falls eine elektromechanische oder hydraulische Übertragungseinrichtung zwischen dem Schalthebel und der Verstelleinheit des Getriebes verwendet wird, ist es zweckmäßig, die Blockiereinrichtung mit dem Schalthebel zusammenwirken zu lassen, um dem Benutzer mechanisch - durch die Blockierung des Schalthebels - anzuzeigen, daß er bei sich bewegendem Fahrzeug nicht schalten kann.

Um die Blockiereinrichtung in Abhängigkeit vom Bewegungszustand des Fahrzeugs zu aktivieren bzw. zu deaktivieren, ist ein Sensor erforderlich, der prüft, ob sich das Fahrzeug bewegt oder im Stillstand befindet. Im Rahmen des erfindungsgemäßen Gedankens sind dazu verschiedene Alternativen denkbar.

Zunächst kann ein Sensor die Geschwindigkeit des Fahrzeugs relativ zum Erdboden messen, was durch ein im Kontakt mit dem Erdboden befindliches Meßrad und einen entsprechenden Rotationssensor erfolgen könnte. Auch berührungslos (z.B. optisch) arbeitende Sensoren sind für diesen Zweck denkbar. Einfacher ist es jedoch, die Geschwindigkeit der mit dem Erdboden im Eingriff befindlichen Elemente des Fahrzeugs (in der Regel Räder und/oder Gleisketten) zu erfassen.

Da das Getriebe mit den mit dem Erdboden im Eingriff befindlichen Elementen in Verbindung steht, ist die Drehung einer Welle des Getriebes ebenfalls ein Maß für die Geschwindigkeit des Fahrzeugs. Daher kann der Öldruck einer von einer Welle des Getriebes angetriebenen Pumpe mittels eines Sensors in Form eines Öldruckschalters erfaßt werden, und zur Steuerung der Blockiereinrichtung dienen. Weil das Getriebe durch die erfindungsgemäße Blockiereinrichtung nicht in Neutralstellung verbracht werden kann, ist sowohl die mit dem Hydromotor verbundene Eingangswelle als auch die Ausgangswelle des Getriebes zum Antrieb der Pumpe verwendbar. Vorzugsweise wird als Pumpe die bereits vorhandene Schmierpumpe des Getriebes verwendet.

Weiterhin kann auch ein Sensor vorgesehen sein, der den Öldruck erfaßt, mit dem der Hydromotor angetrieben wird. Dieser durch eine Taumelscheibe der Hydropumpe, die den Hydromotor antreibt, gesteuerte Öldruck ist ebenfalls ein Maß für die Vortriebsgeschwindigkeit des Fahrzeugs.

Schließlich ist auch denkbar, die Position des vom Bediener betätigbaren Geschwindigkeits-Wahlhebels des Hydromotors zu detektieren. Steht dieser Wahlhebel auf einer Position, die einem Stillstand entspricht, wird das Fahrzeug (ggf. nach Ablauf einer gewissen Zeitspanne) ebenfalls zum Stillstand kommen. Wird der Wahlhebel in die Stillstands-Position verbracht, hebt die Blockiereinrichtung die Arretierung der Schalteinrichtung nach Ablauf der vorbestimmten Zeitspanne auf.

Zur Arretierung der Schalteinrichtung kann ein hydraulisch und/oder elektromagnetisch betätigtes Element vorgesehen sein. Eine entsprechende Steuerung der Blockiereinrichtung ist mit diesem Element verbunden und verbringt es in die Stellung, in der die Schalteinrichtung arretiert ist, solange das Fahrzeug sich nicht im Stillstand befindet. Anderenfalls wird es in eine Stellung verbracht, in der die Schalteinrichtung betätigbar ist. Als elektromagnetische Einrichtung wird hier ein Elektromagnet verstanden, der eingerichtet ist, ein Element in eine erste Position zu verbringen, in der die Schalteinrichtung arretiert ist, und in eine zweite Position, in der es freigegeben ist. Die erste Position kann bei stromdurchflossenem Elektromagnet erreicht werden, und die zweite bei stromlosem Elektromagneten, wobei das Element durch Federkraft aus der ersten in die zweite Position verbracht wird. Der Elektromagnet wird durch eine geeignete Steuerschaltung, die mit einem entsprechenden Sensor verbunden ist, gesteuert. Selbstverständlich kann in einer anderen Ausführungsform auch die erste Position bei stromlosem Elektromagneten und die zweite Position bei bestromtem Elektromagneten erreicht werden. Diese Ausführungsform hat den Vorteil, daß das Getriebe bei Stromausfall arretiert ist, so daß die Bremswirkung des Hydromotors auch in diesem Fall unter allen Umständen aufrechterhalten wird. Eine hydraulische Einrichtung arbeitet analog, nur wird das Element durch einen Hydraulikzylinder angetrieben. Letzterer wird vorzugsweise durch ein elektromagnetisch gesteuertes Ventil mit unter Druck stehendem Öl beaufschlagt. Ähnliche Einrichtungen können auch zur Übertragung der Bewegung des Schalthebels auf die Verstelleinheit verwendet werden.

In den Zeichnungen sind zwei nachfolgend näher beschriebene Ausführungsbeispiele der Erfindung dargestellt. Es zeigt:
- Fig. 1: eine Erntemaschine in Seitenansicht und in schematischer Darstellung,
- Fig. 2: eine schematische Ansicht des Antriebssystems der Erntemaschine,
- Fig. 3: eine Draufsicht auf die Deckplatte des Getriebes der Erntemaschine,
- Fig. 4: einen Schnitt durch das Getriebe entlang der Linie A-A,
- Fig. 5: eine Draufsicht auf eine Deckplatte des Getriebes nach einer zweiten Ausführungsform, und
- Fig. 6: einen Schnitt durch das Getriebe der Figur 5 entlang der Linie A-A.

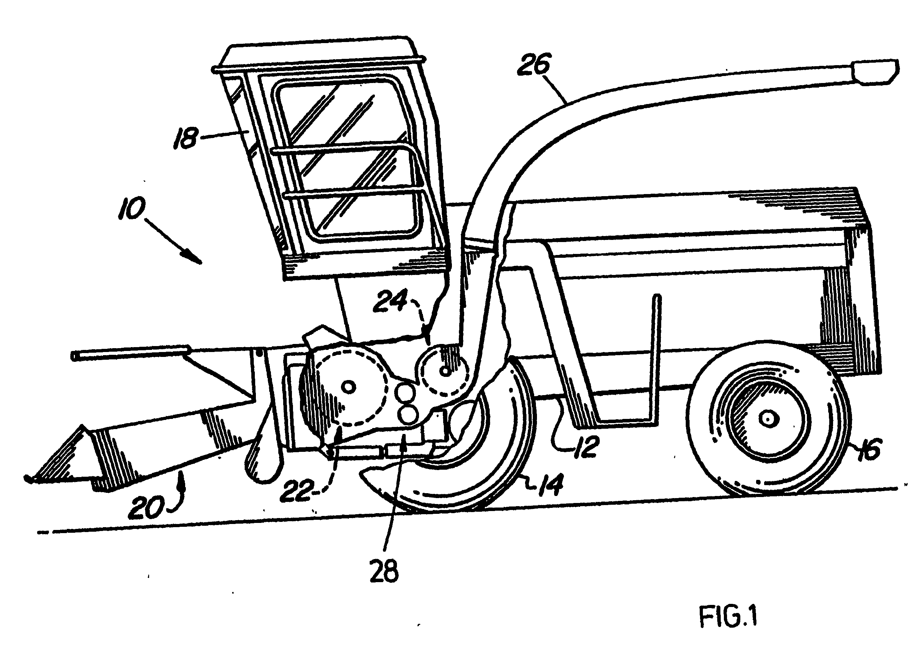

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verläßt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Weitere Einzelheiten der Erntemaschine 10 bedürfen keiner Beschreibung, weil diese an sich bekannt ist. Die Erntemaschine 10 ist hier nur als Beispiel in Form eines Feldhäckslers gezeigt; die Erfindung kann auch an beliebigen anderen selbstfahrenden landwirtschaftlichen Fahrzeugen, wie Mähdreschern, Traktoren, Teleskopladern und dergleichen verwendet werden.

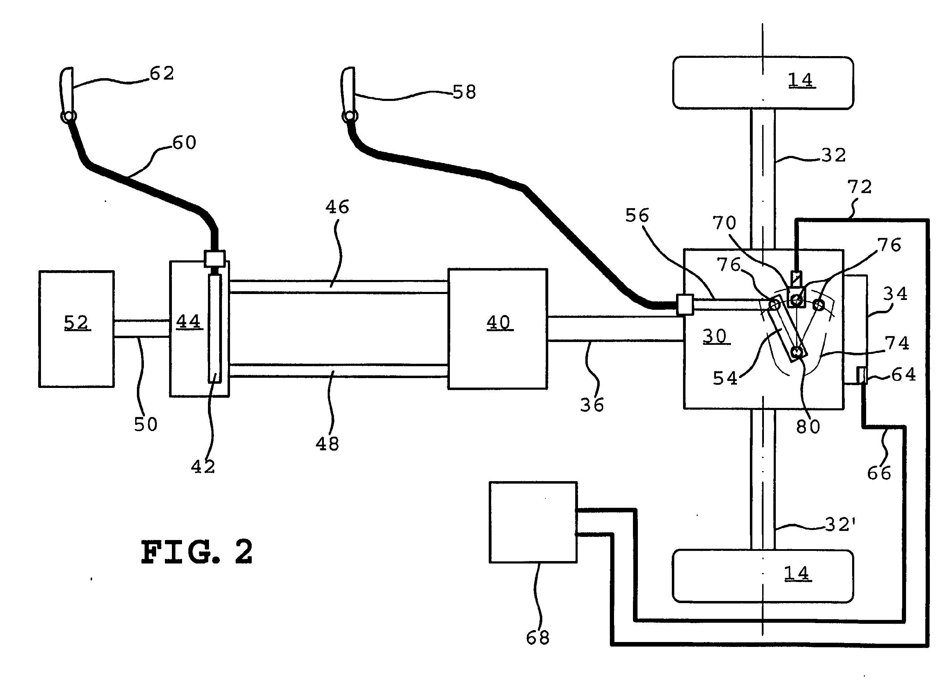

In Figur 2 ist das Antriebssystem des Fahrzeugs in vereinfachter und schematischer Form dargestellt. Die vorderen Räder 14 (und/oder die hinteren Räder 16) stehen durch eine erste bzw zweite Welle 32, 32' mit der Abtriebsseite eines Getriebes 30 in Verbindung. Die Antriebsseite des Getriebes 30 ist über eine dritte Welle 36 mit einem Hydromotor 40 verbunden. Der Hydromotor 40 ist seinerseits durch zwei Hydraulikölleitungen 46, 48 mit einer Hydropumpe 44 gekoppelt, die über eine vierte Welle 50 mit dem Hauptmotor 52 des landwirtschaftlichen Fahrzeugs in Antriebsverbindung steht. Der Hauptmotor 52 ist eingerichtet, die Hydropumpe 44 anzutreiben, die über eine der Leitungen 46, 48 den Hydromotor 40 mit unter Druck stehendem Öl beaufschlagt. Der Hydromotor 40 setzt den Öldruck in eine Rotation der Welle 36 um, die ihrerseits über das Getriebe 30 und die Wellen 32, 32 die Räder 14 antreibt. Das Öl fließt dann durch die andere der Leitungen 46, 48 zur Hydropumpe 44 zurück. Die Geschwindigkeit des Fahrzeugs wird mittels einer Taumelscheibe 42 der Hydropumpe 44 eingestellt, die über einen Seilzug 60 und einen in der Kabine 18 angeordneten, vom Bediener des Fahrzeugs betätigbaren Geschwindigkeits-Wählhebel 62 verstellbar ist. Eine Umkehrung der Fahrtrichtung des Fahrzeugs kann durch Umkehrung der Flußrichtung des Öls in den Leitungen 46, 48 über geeignete (nicht dargestellte) Hydraulikventile und einen entsprechenden Schalter in der Kabine 18 erfolgen. Auch ein Getriebe 30 mit Rückwärtsgang wäre denkbar; in der vorliegenden Ausführungsform findet jedoch die vorgenannte Lösung Anwendung.

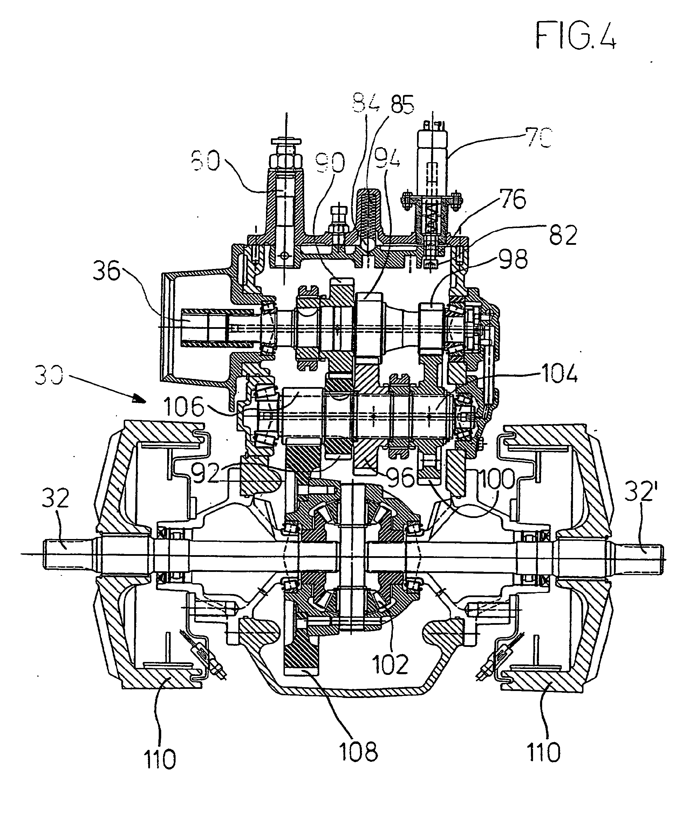

Das Getriebe 30 weist drei unterschiedliche Übersetzungsverhältnisse auf, die mittels eines Schalthebels 58 in der Kabine 18 auswählbar sind. Der Schalthebel 58 ist über einen Seilzug 56 mit einem Hebel 54 verbunden, der seinerseits in Antriebsverbindung mit einer im Inneren des Gehäuses des Getriebes 30 angeordneten Stellplatte 74 steht. Die Stellplatte 74 dient in an sich bekannter, in den Zeichnungen nicht näher dargestellten Weise dazu, das Übersetzungsverhältnis des Getriebes 30 zu wählen, d. h. die Zahnräder des Getriebes 30 auszuwählen, die eine Antriebsverbindung zwischen der antriebsseitigen dritten Welle 36 und der abtriebsseitigen ersten und zweiten Welle 32, 32' herstellen. Die Zahnräder 90, 94, 98 (s. Figur 4) sind in fester Verbindung mit der dritten Welle 36, während durch die Stellplatte 74 mittels verschiebbarer Kopplungsglieder (s. z.B. EP 0819562 A) festgelegt wird, welches der drei Zahnräder 92, 96 und 100 in drehmomentschlüssiger Verbindung mit der Zwischenwelle 104 steht, die ihrerseits über ein Zahnradpaar 106, 108 und ein Differentialgetriebe 102 die erste und die zweite Welle 32, 32'antreibt. Beim Schaltvorgang wird der Hebel 54 und die mit ihm in Antriebsverbindung stehende Stellplatte 74 in der Ebene der Figur 2 um eine Schwenkachse 80 verschwenkt. Die Stellplatte 74 kann eine von drei unterschiedlichen Betriebspositionen annehmen, in denen jeweils ein anderes Übersetzungsverhältnis ausgewählt ist.

Steht die Stellplatte 74 in einer Stellung zwischen zwei benachbarten Betriebspositionen, ist das Getriebe 30 in einer Neutralstellung (Leerlauf), in der keine Antriebsverbindung zwischen den Wellen 32, 32' und der dritten Welle 36 besteht. In diesem Fall kann weder ein Vortrieb durch den Hydromotor 40 erfolgen, noch kann er eine Bremswirkung entfalten. Letztere ergibt sich, wenn die Taumelscheibe 42 in einer Stellung ist, die einer geringeren Geschwindigkeit als der jeweiligen Fahrzeuggeschwindigkeit entspricht. Um zu verhindern, daß das Getriebe 30 während der Fahrt in die Neutralstellung geschaltet wird, so daß die Bremswirkung des Hydromotors 40 während des Fahrbetriebs stets zur Verfügung steht und als Betriebsbremse für das Fahrzeug genutzt werden kann, ist eine Blockiereinrichtung vorgesehen, die die Schalteinrichtung des Getriebes 30 arretiert, falls sich das Fahrzeug nicht im Stillstand befindet.

Die Blockiereinrichtung umfaßt eine Steuerung 68, die über eine Leitung 66 mit einem Sensor 64 verbunden ist. Der Sensor 64 ist an einer Schmierpumpe 34 des Getriebes 30 angebracht und erfaßt den Öldruck, der von der Schmierpumpe 34 bereitgestellt wird. Die an sich bekannte Schmierpumpe 34 steht mit einer der Wellen 32, 32' oder 36 in Antriebsverbindung und dient zur Schmierung des Getriebes. Der von der Schmierpumpe 34 erzeugte Öldruck ist somit ein Maß für die Drehgeschwindigkeit der vorderen Räder 14. Auch in Ausführungsformen, in denen die Schmierpumpe 34 durch die dritte Welle 36 angetrieben wird, steht sie mit den vorderen Rädern 14 in Antriebsverbindung, da die im folgenden erläuterte Blockiereinrichtung das Verbringen der Stellplatte 74 in die Neutralstellung unterbindet, falls das Fahrzeug fährt.

Stellt der Sensor 64 fest, daß sich das Fahrzeug bewegt, aktiviert die Steuerung 68 über eine Leitung 72 ein Arretierelement 70, welches auf elektromagnetische Art und Weise einen Stift 82 (s. Figur 4) in eine Öffnung 76 der Stellplatte 74 verbringt. Der Stift 82 blockiert die Stellplatte 74 mechanisch und verhindert, daß der Schalthebel 58 bewegt wird. Das Getriebe 30 kann somit nicht in die Neutralstellung verbracht werden. Falls der Sensor andererseits feststellt, daß sich das Fahrzeug im Stillstand befindet, wird das Arretierelement 70 deaktiviert und der Stift 82 aus der Öffnung 76 herausgezogen. Ein Betätigen des Schalthebels 58 und ein Verbringen der Stellplatte 74 in eine andere Betriebsposition ist problemlos möglich. Jeder der drei Betriebspositionen der Stellplatte 74 ist eine Öffnung 76 zugeordnet, in die der Stift 82 jeweils eindringen kann.

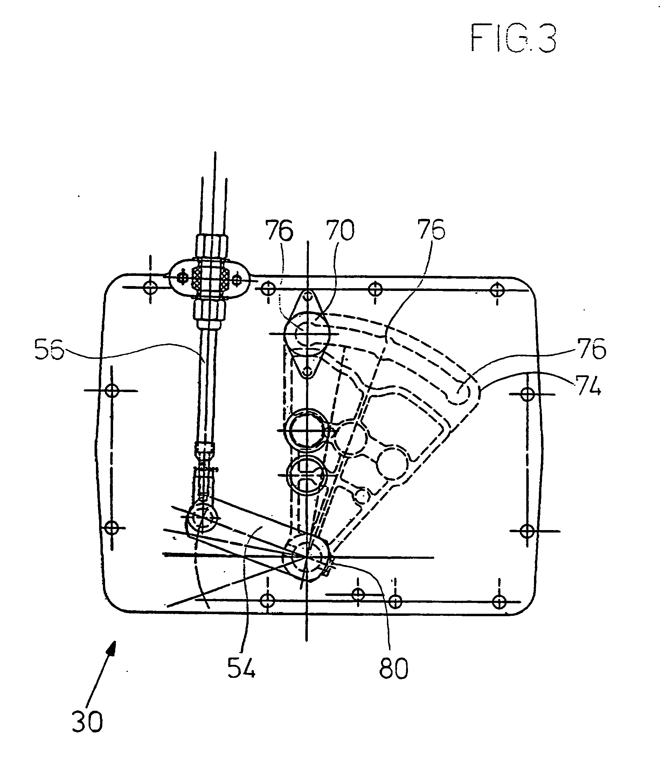

Anhand der Figur 3, die eine Draufsicht auf das Getriebe 30 zeigt, ist erkennbar, daß die Öffnungen 76 in der Stellplatte 74 durch Langlöcher verbunden sind, die das Einbringen des Stiftes 82 in die jeweilige Öffnung 76 erleichtern sollen. Ein Verrasten der Stellplatte 74 in ihrer jeweiligen Betriebsposition wird durch eine mit der Kraft einer Feder 85 beaufschlagten Kugel 84 erzielt, die in entsprechende Bohrungen in der Stellplatte 74 eindringt.

Anhand des in Figur 4 dargestellten vertikalen Schnitts durch das Getriebe ist erkennbar, daß die dritte Welle 36 in Figur 4 gegenüber Figur 2 (in der sie zur Vereinfachung versetzt dargestellt ist) um 90° gedreht ist. Außerdem sind-den Wellen 32, 32' zugeordnete Bremsen 110 erkennbar, die eine zusätzliche Bremswirkung zu der des Hydraulikmotors 40 bereitstellen.

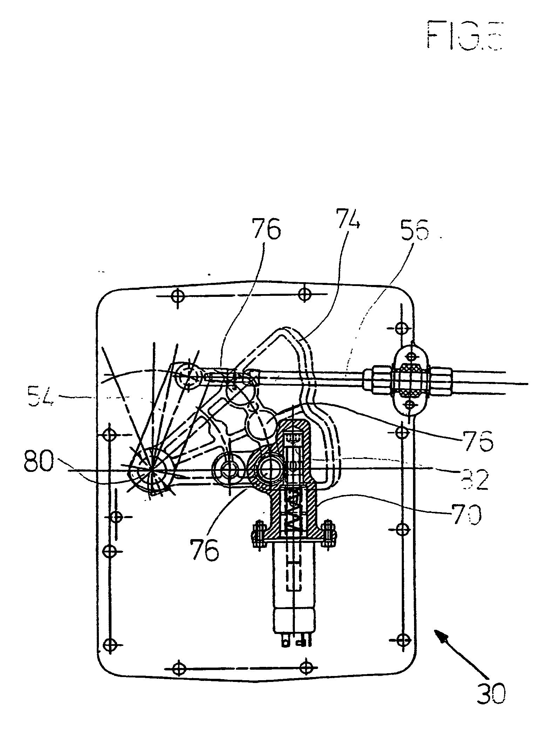

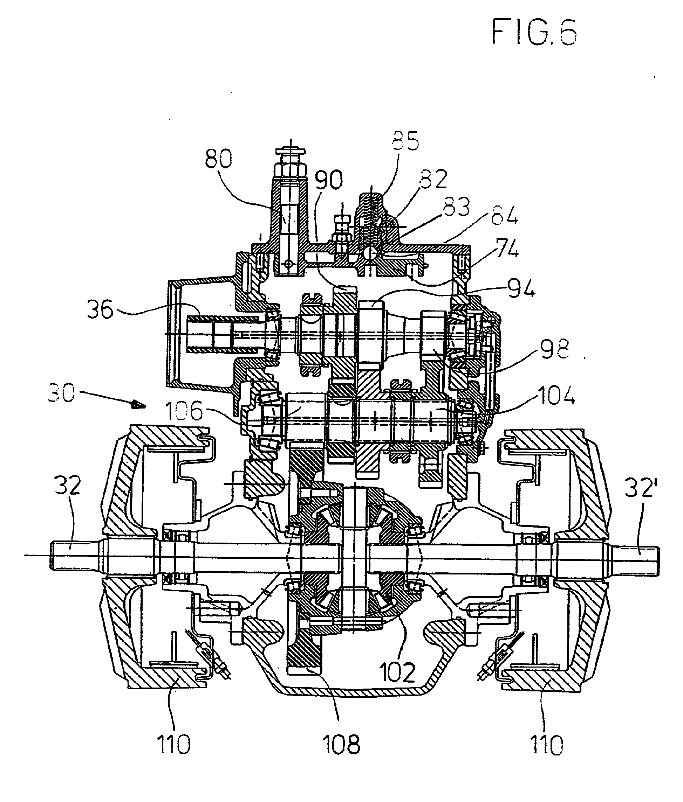

In den Figuren 5 und 6 ist ein Getriebe 30 gemäß einer zweiten Ausführungsform der Erfindung wiedergegeben. Teile, die den in den Figuren 2 bis 4 gezeigten Teilen entsprechen, sind mit übereinstimmenden Bezugsziffern gekennzeichnet. Die meisten dieser Teile sind identisch, so daß sich für sie eine detailliertere Beschreibung erübrigt. In der zweiten Ausführungsform der Erfindung ist die Stellplatte 74 ebenfalls um eine Schwenkachse 80 drehbar gelagert und mit drei Öffnungen 76 gleichen Abstands von der Schwenkachse 80 versehen, die zur Aufnahme einer Kugel 84 ausgestattet sind. Beim Schalten dreht sich die Stellplatte um die Schwenkachse 80 und die Kugel 84 wird gegen die Kraft einer Feder 85, die durch ein zwischen Kugel 84 und Feder 85 angeordnetes Element 83 übertragen wird, (in Figur 6) nach oben gedrückt. Durch die Kugel 84 erreicht man also ein Verrasten der Stellplatte 74 in Drehstellungen, die jeweils einer Betriebsposition mit einem bestimmtem Übersetzungsverhältnis des Getriebes 30 entspricht. Das Arretierelement 70 ist in der zweiten Ausführungsform der Erfindung eingerichtet, die Bewegung der Kugel 84 zu blockieren, so daß ebenfalls eine Drehung um die Schwenkachse 80 unterbunden ist. Dazu ist das Arretierelement mit einem Stift 82 verbunden, der eingerichtet ist, die (bezüglich der Figur 6) vertikale Bewegung des an der Kugel 84 anliegenden Elements 83 zu unterbinden, falls das Arretierelement 70 aktiviert ist. Ist das Arretierelement nicht aktiviert, kann sich das Element 83 und somit auch die Kugel 84 frei bewegen, so daß ein Schaltvorgang möglich ist. Ein wesentlicher Unterschied gegenüber der in den Figuren 3 bis 5 gezeigten Ausführungsform besteht darin, daß das Arretierelement 70, das ebenfalls mit einem Elektromagneten ausgestattet ist, parallel zur Stellplatte 74 und zur Oberseite des Getriebes 30 orientiert ist. Die zweite Ausführungsform benötigt daher weniger Bauraum und kann leichter in bereits in der Serienfertigung befindliche oder gar bereits vorhandene landwirtschaftliche Fahrzeuge eingesetzt werden.

Anzumerken ist, daß anstelle eines elektromagnetisch betätigten Arretierelements 70 auch ein hydraulisch betätigtes Arretierelement verwendbar wäre. Auch sind andere Sensoren anstelle des Sensors 64 zur Erfassung der Geschwindigkeit des Fahrzeugs verwendbar, wie beispielsweise mit den Rädern zusammenwirkende Geschwindigkeitssensoren.

## Patentansprüche

1. Antriebssystem eines landwirtschaftlichen Fahrzeugs, mit einem Hydromotor (40), der unter Zwischenschaltung eines Getriebes (30), das eine Neutralstellung aufweist, mit dem Erdboden im Eingriff befindliche Elemente zum Vortrieb des Fahrzeugs, insbesondere Räder (14, 16) und/oder Gleisketten, antreibt, und mit einer Schalteinrichtung zum Schalten des Getriebes (30), wobei der Hydromotor (40) geeignet ist, auf die mit dem Erdboden im Eingriff befindlichen Elemente als Bremse zu wirken, **gekennzeichnet durch** eine Blockiereinrichtung, die eingerichtet ist, die Schalteinrichtung zu arretieren, falls das Fahrzeug sich nicht im Stillstand befindet.

2. Antriebssystem nach Anspruch 1, **dadurch gekennzeichnet, daß** die Blockiereinrichtung die Schalteinrichtung freigibt, wenn sich das Fahrzeug im Stillstand befindet.

3. Antriebssystem nach Anspruch 1 oder 2, **dadurch gekennzeichnet, daß** die Schalteinrichtung einen vom Bediener verstellbaren Schalthebel (58) umfaßt, der mit einer Verstelleinheit (54) des Getriebes (30) durch eine mechanische Einrichtung funktionsmäßig in Verbindung steht.

4. Antriebssystem nach einem der Ansprüche 1 bis 3, **dadurch gekennzeichnet, daß** die Blockiereinrichtung eingerichtet ist, einen vom Bediener betätigbaren Schalthebel (58) der Schalteinrichtung und/oder eine Verstelleinheit (54) und/oder eine Stellplatte (74) des Getriebes (30) und/oder eine mechanische Einrichtung, (56) über die der Schalthebel (58) vorzugsweise mit der Verstelleinheit (54) funktionsmäßig in Verbindung steht, zu arretieren.

5. Antriebssystem nach einem der vorhergehenden Ansprüche, **dadurch gekennzeichnet, daß** die Blockiereinrichtung mit einem Sensor ausgestattet ist, der die Geschwindigkeit des Fahrzeugs relativ zum Erdboden und/oder die Geschwindigkeit der mit dem Erdboden im Eingriff befindlichen Elemente mißt.

6. Antriebssystem nach Anspruch 5, **dadurch gekennzeichnet, daß** die Blockiereinrichtung mit einem Sensor (64) ausgestattet ist, der den Öldruck einer von einer Welle, beispielsweise einer Ausgangswelle, des Getriebes angetriebenen Pumpe (34), insbesondere einer Schmierpumpe, mißt.

7. Antriebssystem nach einem der Ansprüche 1 bis 4, **dadurch gekennzeichnet, daß** die Blockiereinrichtung mit einem Sensor ausgestattet ist, der den Öldruck mißt, mit dem der Hydromotor (40) angetrieben wird.

8. Antriebssystem nach einem der Ansprüche 1 bis 4, **dadurch gekennzeichnet, daß** die Blockiereinrichtung mit einem Sensor ausgestattet ist, der die Position eines Geschwindigkeits-Wählhebels (42) des Hydromotors (40) detektiert.

9. Antriebssystem nach einem der vorhergehenden Ansprüche, **dadurch gekennzeichnet, daß** die Blockiereinrichtung eingerichtet ist, die Schalteinrichtung mittels eines hydraulisch und/oder elektromechanisch bewegbaren Elements (70) zu arretieren.

## Claims

1. A drive system of an agricultural vehicle, with a hydraulic motor (40) which, for propulsion of the vehicle, drives via an intervening transmission (30) which has a neutral position the elements in engagement with the ground, especially wheels (14, 16) and/or crawler tracks, and with a shift device for shifting the transmission (30), wherein the hydraulic motor (40) is adapted to operate on the elements in engagement with the ground as brakes, **characterized by** a blocking device which is arranged to arrest the shift device if the vehicle is not stationary.

2. A drive system according to claim 1, **characterized in that** the blocking device enables the shift device when the vehicle is stationary.

3. A drive system according to claim 1 or 2, **characterized in that** the shift device comprises a shift lever (58) which can be shifted by the operator and is functionally connected to a shifting unit (54) of the transmission (30) by a mechanical device.

4. A drive system according to any of claims 1 to 3, **characterized in that** the blocking device is arranged to arrest a shift lever (58) operable by an operator of the shift device and/or a shifting unit (54) and/or a positioning plate (74) of the transmission (30) and/or a mechanical device (56) through which the shift lever (58) is preferably functionally connected to the shift unit (54).

5. A drive system according to any of the preceding claims, **characterized in that** the blocking device is equipped with a sensor which measures the speed of the vehicle relative to the ground and/or the speed of the elements in engagement with the ground.

6. A drive system according to claim 5, **characterized in that** the blocking device is equipped with a sensor (64) which measures the oil pressure of a pump (34), especially a lubricating pump, driven by a shaft, for example an output shaft, of the transmission.

7. A drive system according to any of claims 1 to 4, **characterized in that** the blocking device is equipped with a sensor which measures the oil pressure with which the hydraulic motor (40) is driven.

8. A drive system according to any of claims 1 to 4, **characterized in that** the blocking device is equipped with a sensor which detects the position of speed selector lever (42) of the hydraulic motor (40).

9. A drive system according to any of the preceding claims, **characterized in that** the blocking device is arranged to arrest the shift device by means of a hydraulically and/or electro-mechanically movable element (70).

## Revendications

1. Système d'entraînement d'un véhicule agricole, comportant un moteur hydraulique (40) qui, moyennant le montage intercalé d'une boîte de vitesses (30) comportant une position neutre, actionne des éléments en prise avec le sol, destinés à la propulsion du véhicule, en particulier des roues (14, 16) et/ou des chenilles, et comportant un mécanisme de manoeuvre destiné à commander la boîte de vitesses (30), le moteur hydraulique (40) étant apte à agir en tant que frein sur les éléments en prise avec le sol, **caractérisé par** un dispositif de blocage qui est conçu pour bloquer le mécanisme de manoeuvre lorsque le véhicule n'est pas à l'arrêt.

2. Système d'entraînement selon la revendication 1, **caractérisé en ce que** le dispositif de blocage débloque le mécanisme de manoeuvre lorsque le véhicule est à l'arrêt.

3. Système d'entraînement selon la revendication 1 ou 2, **caractérisé en ce que** le mécanisme de manoeuvre comporte un levier de commande (58), qui peut être déplacé par le conducteur et qui est en liaison fonctionnelle avec une unité de réglage (54) de la boîte de vitesses (30) par l'intermédiaire d'un dispositif mécanique.

4. Système d'entraînement selon l'une quelconque des revendications 1 à 3, **caractérisé en ce que** le dispositif de blocage est conçu pour bloquer un levier de commande (58) du mécanisme de manoeuvre, destiné à être actionné par le conducteur, et/ou une unité de réglage (54) et/ou une plaque de réglage (74) de la boîte de vitesses (30) et/ou un dispositif mécanique (56), par l'intermédiaire duquel le levier de commande (58) est en liaison fonctionnelle, de préférence, avec l'unité de réglage (54).

5. Système d'entraînement selon l'une quelconque des revendications précédentes, **caractérisé en ce que** le dispositif de blocage est équipé d'un capteur, qui mesure la vitesse du véhicule par rapport au sol et/ou la vitesse des éléments en prise avec le sol.

6. Système d'entraînement selon la revendication 5, **caractérisé en ce que** le dispositif de blocage est équipé d'un capteur (64) qui mesure la pression d'huile d'une pompe (34), en particulier une pompe de lubrification, actionnée par un arbre, tel qu'un arbre de sortie de la boîte de vitesses.

7. Système d'entraînement selon l'une quelconque des revendications 1 à 4, **caractérisé en ce que** le dispositif de blocage est équipé d'un capteur qui mesure la pression d'huile par laquelle le moteur hydraulique (40) est actionné.

8. Système d'entraînement selon l'une quelconque des revendications 1 à 4, **caractérisé en ce que** le dispositif de blocage est équipé d'un capteur qui détecte la position d'un levier de sélection de vitesse (42) du moteur hydraulique (40).

9. Système d'entraînement selon l'une quelconque des revendications précédentes, **caractérisé en ce que** le dispositif de blocage est conçu pour bloquer le mécanisme de manoeuvre au moyen d'un élément (70) pouvant être actionné par voie hydraulique et/ou électromécanique.
